# EUROPÄISCHE PATENTSCHRIFT

(11) **EP 1 846 793 B1**
(45) Veröffentlichungstag und Bekanntmachung des Hinweises auf die Patenterteilung: **18.05.2011**
(21) Anmeldenummer: 06701205.4
(22) Anmeldetag: 10.01.2006
(51) Int. Cl.: G02B 21/06

(54) **LED-MODUL ZUR BELEUCHTUNG IN EINEM MIKROSKOP**
LED-MODULE USED FOR ILLUMINATION IN A MICROSCOPE
MODULE DE DEL POUR L'ECLAIRAGE D'UN MICROSCOPE

(30) Priorität: 08.02.2005 DE 102005005618
(43) Veröffentlichungstag der Anmeldung: 24.10.2007
(73) Patentinhaber: Leica Microsystems CMS GmbH, 35578 Wetzlar (DE)
(72) Erfinder: WEISS, Albrecht, 35440 Linden (DE)
(74) Vertreter: Kudlek & Grunert Patentanwälte
(86) Internationale Anmeldenummer: PCT/EP2006/050113
(87) Internationale Veröffentlichungsnummer: WO 2006/084777

(56) Entgegenhaltungen:
- EP-A- 1 213 773
- DE-A1- 19 624 087
- US-A1- 2004 105 149

## Beschreibung

Die Erfindung betrifft ein LED-Modul zur Beleuchtung in einem Mikroskop.

Das U.S. Patent 6,327,102 offenbart ein für Vakuum geeignetes Miniaturmikroskop. Die auf einem CCD basierende mikroskopische Kamera hat eine Beleuchtungseinrichtung integriert. Eine LED ist eine seitliche Öffnung des Objektivs platziert, um eine Beleuchtung für das Objekt zur Verfügung zu stellen. Das Patent erwähnt nicht, dass die Diode auch gegen eine herkömmliche Niedervolt-Beleuchtungsquelle austauschbar.

Das U.S. Patent 6,313,943 beschreibt ein Unterwassermikroskop. Die LED-Lichtquelle ist in einem Kreis um die optische Achse des optischen Systems der Kamera angeordnet. Die LED-Beleuchtungsquelle emittiert Licht in Synchronisation mit einem Videosignal der Kamera. Ein LED-Modul zum Austausch ist hier nicht vorgeschlagen.

Die deutschen Patentanmeldung DE 100 17 823 A1 offenbart eine mikroskopische Beleuchtungsvorrichtung, bei der die Lichtquelle von einer Leuchtdiodenanordnung gebildet wird. Die Leuchtquelle ist ein Leuchtdiodenfeld, das aus einer Mehrzahl von vorzugsweise identischen Leuchtdioden besteht, die in dichter Packung in konzentrischen Ringen angeordnet sind und somit eine Kreisfläche überdecken. Eine Austauschbarkeit der Leuchtdiodenanordnung gegenüber einer herkömmlichen Lichtquelle ist nicht vorgesehen.

Die Europäische Patentschrift EP 1 331 504 B1 offenbart eine Beleuchtungseinrichtung, für Mikroskope, welche mit mindestens einer elektrischen Lichtquelle, wie eine Glühlampe, eine Neonlampe, eine Leuchtdiode oder dergleichen, ausgerüstet ist. Die Lichtquelle ist in einem Gehäuse angeordnet, das sich U-förmig um ein Objektiv des Mikroskops erstreckt. Diese Vorrichtung ist nicht geeignet, um gegen eine herkömmliche für die Mikroskopbeleuchtung vorgesehene Lampe ausgetauscht zu werden.

Die deutsche Offenlegungsschrift DE 37 34 691 A1 offenbart eine Beleuchtungsvorrichtung für Mikroskope, bei der die herkömmliche Lichtquelle gegen eine Halbleiterlichtquelle ersetzt ist. Das Beleuchtungssystem ist in ihrem grundsätzlichen Aufbau ein sogenanntes Köhler-System. Dieses System benutzt eine Flächenlichtquelle, bestehend aus einer Halbleiterlichtquelle, beispielsweise einer LED oder Laserdiode, anstelle der gewöhnlichen Halogenlampe. Eine Austauschbarkeit der LEDs gegenüber einer herkömmlichen Lichtquelle, um dabei auch die Stromversorgung einer herkömmlichen Lichtquelle zu nutzen, ist hier nicht offenbart.

Die deutsche Offenlegungsschrift DE 103 14 125 A1 offenbart eine Anordnung zur Beleuchtung von Objekten mit Licht unterschiedlicher Wellenlänge. Hierzu ist eine um eine Drehachse drehbare Aufnahmevorrichtung mit Halterungen für jeweils mindestens eine LED vorgesehen. Die Aufnahmevorrichtung ist in einem am Gerätegehäuse (Mikroskop) ansetzbaren oder im Gerätegehäuse positionierten Gehäuse angeordnet. Eine Antriebseinrichtung zur definierten Einstellung der Aufnahmevorrichtung ist derart vorgesehen, dass die LED mit der jeweils für Messungen und/oder Beobachtung benötigten Schwerpunktwellenlänge vor einer Lichtaustrittsöffnung des Gehäuses positionierbar ist. Eine Austauschbarkeit der LED-Beleuchtung gegenüber einer herkömmlichen Beleuchtung ist durch diese Schrift nicht offenbart.

Die deutsche Offenlegungsschrift DE 198 45 603 A1 offenbart eine Beleuchtungseinrichtung für ein Mikroskop. Im Beleuchtungsstrahlengang ist eine erste Lichtquelle, eine Beleuchtungslinse, eine Aperturblende und ein Kondensorkopf angeordnet. Das Beleuchtungslicht wird durch die Aperturblende über den Kondensorkopf in die Objektebene gelenkt. Im Beleuchtungsstrahlengang ist auf der optischen Achse eine zweite Lichtquelle angeordnet, die von dem Kondensorkopf nach unendlich abgebildet wird. Durch die Anordnung der beiden Lichtquellen, die als LEDs ausgebildet sind, wird nur derjenige geometrische Lichtfluss erzeugt, der von dem entsprechenden Objektiv verwendet wird. Damit kann auf die bisher verwendeten leistungsstarken Halogenlampen verzichtet werden. Eine beliebige Austauschbarkeit der LEDs gegenüber den Halogenlichtquellen ist hier nicht vorgesehen.

Die US Patentanmeldung 2004/0027658 A1 offenbart ein Beleuchtungssystem für ein Mikroskop. Eine LED-Lichtquelle ist in den optischen Strahlengang vorgesehen und dabei unterhalb des Mikroskoptisches angeordnet. Ein Teil des Grundkörpers des Mikroskops hat eine entfernbare oder ausschwenkbare Platte, um dadurch die verbrauchten Batterien oder die LED auszutauschen. Ein Austausch der LED gegenüber einer herkömmlichen Lichtquelle ist hier nicht vorgesehen und kann durch die elektronische Schaltung auch nicht gewährleistet werden.

Die US 2004/0105149 A1 offenbart ein Mikroskop mit einer LED-Beleuchtung, bei der das entsprechende LED-Modul einen Anschluss für eine Batterie sowie einen weiteren Anschluss für einen Ein-Aus-Schalter aufweist. Die Beleuchtung des Mikroskops soll bei so geringer Leistung erfolgen, dass ein Batteriebetrieb möglich ist.

Schließlich offenbart die EP 1 213 773 A1 verschiedene Beleuchtungsarten insbesondere für tragbare Fernsehgeräte oder tragbare PCs unter Verwendung üblicher LED-Lampen.

Der Erfindung liegt die Aufgabe zugrunde ein LED-Modul zu schaffen, das ohne zusätzlichen konstruktiven Aufwand gegen eine herkömmliche Halogenlichtquelle eines Mikroskops ausgetauscht werden kann.

Die objektive Aufgabe wird durch ein LED-Modul zur Beleuchtung in einem Mikroskop gelöst, das die Merkmale des Patentanspruchs 1 aufweist.

Die Erfindung hat den Vorteil, dass das LED-Modul mit zwei Anschlusspins für die Stromversorgung versehen ist, die in einem Lampensockel einer herkömmlichen Halogenlampe passen. Das LED-Modul besteht aus einem Träger, an dem die zwei Anschlusspins angebracht sind. Auf dem Träger ist mindestens eine LED, ein Brücken-Gleichrichter und ein Vorwiderstand angeordnet. Die Anschlusspins sind derart ausgestaltet und derart am Träger des LED-Moduls angeordnet, dass die mindestens eine LED sich an der Position der Glühbirne befindet, wenn das LED-Modul in den Lampensockel des Mikroskops eingesetzt ist.

Die auf dem LED-Modul vorgesehene LED ist eine einzige LED, die weißes Licht aussendet. Gemäß einer anderen Ausführungsform ist es ebenfalls denkbar, dass die auf dem LED-Modul vorgesehenen mehreren LEDs eine LED-Anordnung darstellen, die in ihrer Gesamtheit weißes Licht aussendet. Auf dem Träger des LED-Moduls ist ein Brückengleichrichter vorgesehen, der für die richtige Polarität der mindestens einen LED sorgt und dabei aus dem Wechselspannungs-Netzanteilen beider Halbwellen nutzt. Ebenso ist auf dem Träger des LED-Moduls ein Vorwiderstand vorgesehen, so dass bei maximaler Betriebsspannung der maximal zulässige Strom der mindestens einen LED nicht überschritten ist. Der Lampensockel ist an einem Schieber angebracht, der in ein Stativ des Mikroskops von außen einsetzbar beziehungsweise von dem Stativ des Mikroskops entfernbar ist. Eine Aufnahme für den Schieber ist im Stativ des Mikroskops vorgesehen und sorgt für eine Verbindung für einen am Schieber ausgebildeten Stecker. Bei dem in das Mikroskop eingeschobenen Schieber ist dann die Stromversorgung zum Lampensockel und zu den zwei Anschlusspins des Trägers gewährleistet.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
Fig. 1 eine Seitenansicht des Mikroskops, das das erfindungsgemäße LED-Modul zur Beleuchtung umfasst;
Fig. 2 eine perspektivische Ansicht des Zusammenwirkens der Aufnahme und des Schiebers zum Herstellen einer elektrischen Verbindung für den im Schieber angeordneten Lampensockel;
Fig. 3 eine schematische Draufsicht auf das erfindungsgemäße LED-Modul; und
Fig. 4 eine Seitenansicht des erfindungsgemäßen LED-Moduls.

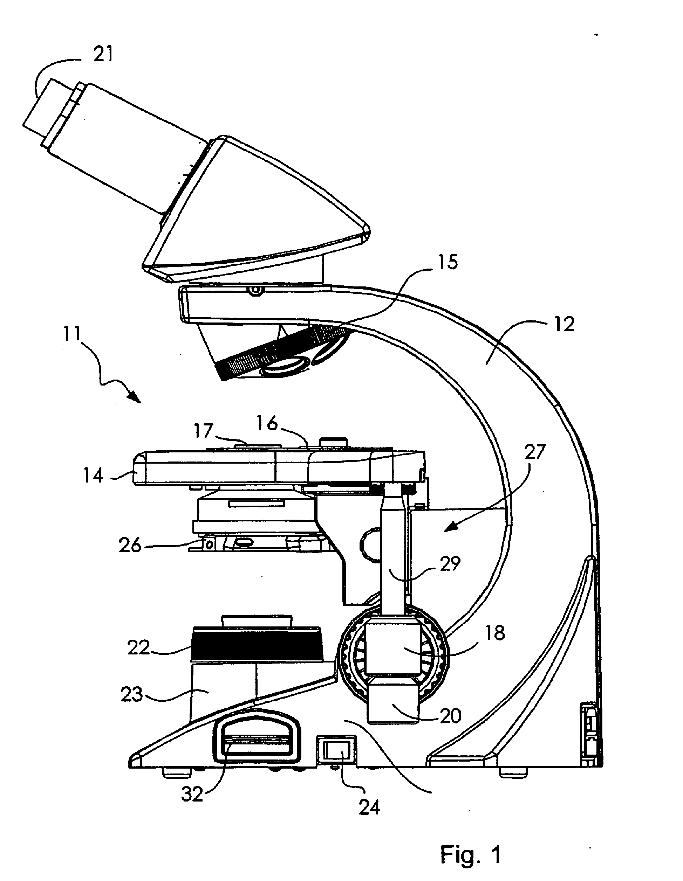

Figur 1 zeigt eine Seitenansicht eines aufrechten Mikroskops, bei dem die gegenwärtige Erfindung Verwendung findet. Das Mikroskop umfasst ein Stativ 12, an dem alle Komponenten des Mikroskops befestigt werden. Auf der Oberseite des Stativs 12 ist ein Binokular 21 zum Betrachten eines auf dem Mikroskoptisch 14 abgelegten Objektträgers 17 vorgesehen. Der Objektträger 17 ist in eine Objektträgerhalterung 16 eingesetzt. Ein Revolver 15 ist ebenfalls am oberen Teil des Stativs 12 angebracht. Das Mikroskop umfasst ferner ein austauschbares Mikroskoptisch-Antriebssystem 11, das ebenfalls am Stativ 12 befestigt ist. Das austauschbare Mikroskoptisch-Antriebssystem 11 umfasst ebenfalls einen Antriebsmechanismus 27. Der Mikroskoptisch 14 kann über einen Antriebsmechanismus 29, der einen Betätigungsknopf für die X-Richtung 18 und einen Betätigungsknopf für die Y-Richtung 20 aufweist, entsprechend bewegt werden. Unterhalb des Mikroskoptisches 14 ist eine Kondensoranordnung 26 vorgesehen. Am unteren Teil 28 des Stativs12 ist eine Leuchtfeldblendenanordnung 22 vorgesehen. Die Kondensoranordnung 26 definiert eine Beleuchtungsachse p. In einer Seitenwand 31 des Stativs 12 ist ein Schieber 32 vorgesehen, der eine Lichtquelle (nicht dargestellt) trägt. Ebenso ist an der Seitenwand 31 des Stativs 12 des Mikroskops ein Schalter 24 vorgesehen, mit dem beispielsweise die Stromversorgung für die Lichtquelle angeschaltet werden kann.

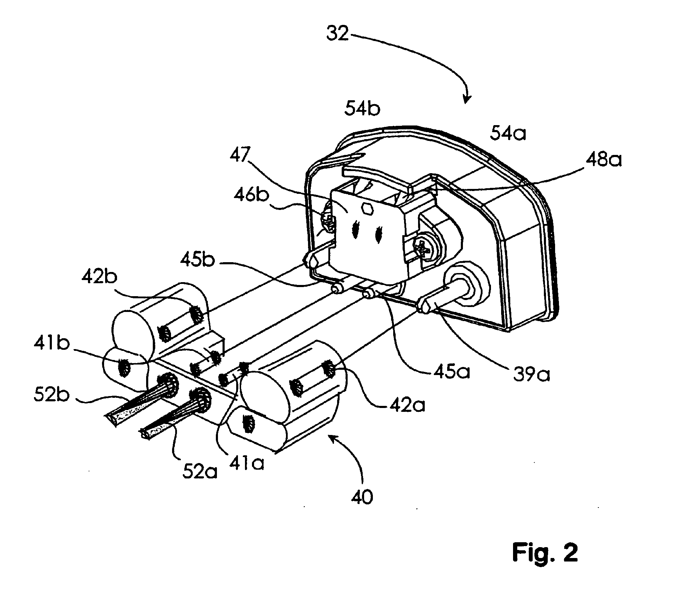

Figur 2 zeigt eine Explosionsdarstellung des Zusammenwirkens der Aufnahme 40 und des Schiebers 32. Der Schieber 32 umfasst zwei Ausrichtstifte 39a und 39b, die in zwei entsprechende Sauglöcher 42a und 42b an der Aufnahme 40 passen. Ebenso sind am Schieber 32 zwei elektrische Kontakte 45a und 45b vorgesehen, die in zwei entsprechende elektrische Kontakte 41 a und 41 b an der Aufnahme 40 passen. Die elektrischen Kontakte 412a, 41 b sind ebenfalls als Sauglöcher ausgebildet. Die Stromversorgung zur Aufnahme 40 wird über die Leitungen 42a und 42b gewährleistet. Der Lampensockel 47 ist mit zwei Schrauben 46a und 46b im Schieber 32 befestigt. Der Lampensockel 47 weist zwei Öffnungen 54a und 54b auf, in die Anschlusspins einer Lampe eingesetzt werden können, um somit den Stromanschluss für die Lampe herzustellen.

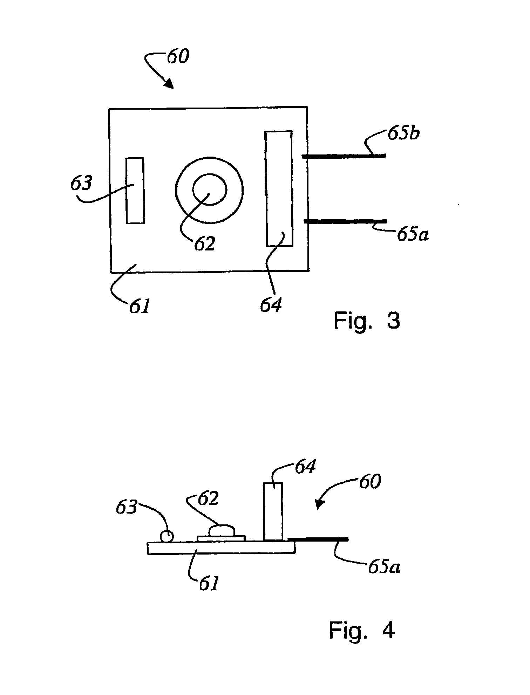

Figur 3 stellt eine Draufsicht auf das erfindungsgemäße LED-Modul 60 der gegenwärtigen Erfindung dar. Das LED-Modul 60 weist einen Träger 61 auf, auf dem die mindestens eine LED 62, ein Vorwiderstand 63 und ein Brücken-Gleichrichter 64 angeordnet sind. Mit dem Träger 61 sind zwei Anschlusspins 65a, 65b verbunden. Die beiden Anschlusspins 65a und 65b haben eine derartige Konfiguration, dass sie in den Lampensockel 74 für eine herkömmliche Halogenlichtiampe eingesetzt werden können.

In Figur 4 ist das LED-Modul 60 in der Seitenansicht dargestellt. Der Träger 61 ist als Platte ausgebildet, auf der die bereits erwähnten Elemente, wie zum Beispiel LED 62, Vorwiderstand 63 und Brücken-Gleichrichter 64 angeordnet sind. Die Anschlusspins 65a, 65b sind derart am Träger 61 vorgesehen, so dass die Leuchtdiode 62 an der Stelle einer Leuchtwendel einer herkömmlichen Halogenlampe positioniert ist, wenn das LED-Modul 60 in den Lampensockel 47 eines Mikroskops eingesetzt ist. Bevorzugt wird als LED 62 eine einzelne weiße, leistungsstarke Leuchtdiode, wie zum Beispiel von Typ Luxeon, verwendet. Ebenso ist es denkbar, dass auf dem LED-Modul 60 mehrere Leuchtdioden angeordnet sind, die jeweils lichtunterschiedliche Wellenlängen aussenden können und dabei durch Lichtmischung auch weißes Licht erzielen können. Der auf dem LED-Modul 60 vorgesehene Brückengleichrichter 64 sorgt dafür, dass die Polarität der an der LED 62 anliegenden Spannung richtig ist. Bei Wechselspannungsnetzanteilen werden beide Halbwellen genutzt. Der Vorwiderstand 63 auf dem LED-Modul 60 ist derart ausgelegt, dass bei maximaler am Mikroskop anliegenden Spannung der maximal zulässige Strom für die LED 62 (oder der mehreren LEDs) nicht überschritten wird. Wird eine LED von Typ Luxeon verwendet, so beträgt zum Beispiel der maximale Strom 350 Milliampere bei einer 1 Watt-Luxeon-LED.

## Patentansprüche

1. Mikroskop-Beleuchtungseinrichtung mit einem LED-Modul (60) wobei das LED-Modul (60) einen Träger (61) zur Aufnahme mindestens einer LED aufweist **dadurch gekennzeichnet, dass** der Träger (61) mit zwei Anschlusspins (65a, 65b) für die Stromversorgung versehen ist, die derart konfiguriert sind, dass sie in einen Lampensockel (47) einer herkömmlichen Halogenlampe passen, wobei der Lampensockel (47) an einem Schieber (32) abgebracht ist, der in ein Stativ (12) des Mikroskops von außen einsetzbar bzw. von dem Stativ (12) des Mikroskops entfernbar ist.

2. Mikroskop-Beleuchtungseinrichtung mit einem LED-Modul (60) nach Anspruch 1, wobei das LED-Modul (60) aus einem Träger (61) besteht, an dem die zwei Anschlusspins (65a, 65b) abgebracht sind, und wobei auf dem Träger (61) mindestens eine LED (62), ein Brücken-Gleichrichter (64) und ein Vorwiderstand (63) angeordnet sind.

3. Mikroskop-Beleuchtungseinrichtung mit einem LED-Modul nach Anspruch 1 oder 2, wobei der Träger (61) und die Anschlusspins (65a, 65b) derart ausgestaltet sind, dass die mindestens eine LED (62) sich an der Position der Glühwendel befindet, wenn das LED-Modul (60) in den Lampensockel (47) eingesetzt ist.

4. Mikroskop-Beleuchtungseinrichtung mit einem LED-Modul nach einem der Ansprüche 1 bis 3, wobei die auf dem LED-Modul (60) vorgesehene LED (62) eine einzige LED ist, die weißes Licht aussendet.

5. Mikroskop-Beleuchtungseinrichtung mit einem LED-Modul nach einem der Ansprüche 1 bis 3, wobei die auf dem LED-Modul (60) vorgesehenen mehreren LEDs eine LED-Anordnung darstellen, die in ihrer Gesamtheit weißes Licht aussendet.

6. Mikroskop-Beleuchtungseinrichtung mit einem LED-Modul (60) nach einem der Ansprüche 1 bis 5, wobei auf dem Träger (61) ein Brücken-Gleichrichter (64) vorgesehen ist, der für die richtige Polarität der mindestens einen LED sorgt und dabei aus den Wechselspannungs-Netzanteilen beide Halbwellen nutzt.

7. Mikroskop-Beleuchtungseinrichtung mit einem LED-Modul nach einem der Ansprüche 1 bis 6, wobei auf dem Träger (61) ein Vorwiderstand vorgesehen ist, so dass bei maximaler Betriebsspannung der maximal zulässige Strom der mindestens einen LED nicht überschritten ist.

8. Mikroskop-Beleuchtungseinrichtung mit einem LED-Modul nach Anspruch 1 bis 7, wobei eine Aufnahme für den Schieber (32) im Mikroskop eine Verbindung für einen am Schieber (32) ausgebildeten Stecker zur Verfügung stellt, um bei im Mikroskop eingeschobenen Schieber die Stromversorgung zum Lampensockel und zu den zwei Anschlusspins des Trägers zu gewährleisten.

## Claims

1. Microscope illuminating device having an LED module (60), wherein the LED module (60) has a carrier (61) for receiving at least one LED, **characterised in that** the carrier (61) is provided with two connecting pins (65a, 65b) for the current supply, which are configured such that they fit into a lamp socket (47) of a conventional halogen lamp, the lamp socket (47) being mounted on a slide (32) which can be inserted from outside into a stand (12) of the microscope or can be removed from the stand (12) of the microscope.

2. Microscope illuminating device having an LED module (60) according to claim 1, wherein the LED module (60) consists of a carrier (61) on which the two connecting pins (65a, 65b) are mounted, and wherein at least one LED (62), a bridge rectifier (64) and a series or dropping resistor (63) are mounted on the carrier (61).

3. Microscope illuminating device having an LED module according to claim 1 or 2, wherein the carrier (61) and the connecting pins (65a, 65b) are configured such that the at least one LED (62) is located in the position of the incandescent filament when the LED module (60) is inserted in the lamp socket (47).

4. Microscope illuminating device having an LED module according to one of claims 1 to 3, wherein the LED (62) provided on the LED module (60) is a single LED that emits white light.

5. Microscope illuminating device having an LED module according to one of claims 1 to 3, wherein the plurality of LEDs provided on the LED module (60) constitute an LED arrangement which as a whole emits white light.

6. Microscope illuminating device having an LED module (60) according to one of claims 1 to 5, wherein a bridge rectifier (64) is provided on the carrier (61), which ensures the correct polarity of the at least one LED and uses the two half-waves from the alternating-voltage parts of the network.

7. Microscope illuminating device having an LED module according to one of claims 1 to 6, wherein a series or dropping resistor is provided on the carrier (61), so that at maximum operating voltage the maximum permissible current of the at least one LED is not exceeded.

8. Microscope illuminating device having an LED module according to one of claims 1 to 7, wherein a receptacle for the slide (32) in the microscope provides a connection for a plug formed on the slide (32), so as to ensure, once the slide has been inserted in the microscope, that there is a supply of current to the lamp socket and to the two connecting pins of the carrier.

## Revendications

1. Dispositif d'éclairage de microscope ayant un module de diodes électroluminescentes (LED) (60), dans lequel le module de LED (60) a un support (61) pour recevoir au moins une LED, **caractérisé en ce que** le support (61) est muni de deux broches de connexion (65a, 65b) pour l'alimentation en courant, lesquelles sont configurées de sorte qu'elles s'emboîtent dans une douille de lampe (47) d'une lampe à halogène habituelle, la douille de lampe étant montée sur une coulisse (32) laquelle peut être insérée depuis l'extérieur dans un pied (12) du microscope ou peut être retirée du pied (12) du microscope.

2. Dispositif d'éclairage de microscope ayant un module de LED (60) selon la revendication 1, dans lequel le module de LED (60) est constitué d'un support (61) sur lequel les deux broches de connexion (65a, 65b) sont montées, et dans lequel au moins une LED (62), un redresseur en pont (64) et une résistance série (63) sont montés sur le support (61).

3. Dispositif d'éclairage de microscope ayant un module de LED selon la revendication 1 ou 2, dans lequel le support (61) et les broches de connexion (65a, 65b) sont configurés de sorte que au moins une LED (62) est localisée dans la position du filament incandescent lorsque le module de.LED (60) est inséré dans la douille de lampe (47).

4. Dispositif d'éclairage de microscope ayant un module de LED selon l'une des revendications 1 à 3, dans lequel la LED (62) agencée sur le module de LED (60) est une LED unique qui émet une lumière blanche.

5. Dispositif d'éclairage de microscope ayant un module de LED selon l'une des revendications 1 à 3, dans lequel la pluralité de LED agencées sur le module de LED (60) constitue un agencement de LED qui émet ensemble une lumière blanche.

6. Dispositif d'éclairage de microscope ayant un module de LED (60) selon l'une des revendications 1 à 5, dans lequel un rectificateur en pont (64) est agencé sur le support (31), lequel garantit la polarité correcte de la au moins une LED et utilise les deux demi-ondes provenant des parties de tension alternative du réseau.

7. Dispositif d'éclairage de microscope ayant un module de LED (60) selon l'une des revendications 1 à 6, dans lequel une résistance série est agencée sur le support (61), de sorte que, à la tension de fonctionnement maximum, le courant maximum autorisé de la au moins une LED n'est pas dépassé.

8. Dispositif d'éclairage de microscope ayant un module de LED selon l'une des revendications 1 à 7, dans lequel un réceptacle pour la coulisse (32) dans le microscope fournit une connexion pour un connecteur formé sur la coulisse (32), de manière à garantir, une fois que la coulisse a été insérée dans le microscope, qu'il y a une alimentation de courant au niveau de la douille de lampe et au niveau des deux broches de connexion du support.
